# EUROPÄISCHE PATENTSCHRIFT

(11) **EP 0 421 922 B1**
(45) Veröffentlichungstag und Bekanntmachung des Hinweises auf die Patenterteilung: **20.10.1993**
(21) Anmeldenummer: 90810669.3
(22) Anmeldetag: 05.09.1990
(51) Int. Cl.: G01B 5/06

(54) **Gerät zur Messung von Abständen**
Distance measuring device
Dispositif pour mesurer des distances

(30) Priorität: 04.10.1989 CH 3636/89
(43) Veröffentlichungstag der Anmeldung: 10.04.1991
(73) Patentinhaber: Meyer, Hans, CH-1020 Renens (CH)
(72) Erfinder: Meyer, Hans, CH-1020 Renens (CH)
(74) Vertreter: Steen, Dieter Markus

(56) Entgegenhaltungen:
- CH-A- 228 228
- GB-A- 1 445 115
- US-A- 2 371 742
- US-A- 3 113 385
- US-A- 3 599 339

## Beschreibung

Die Erfindung betrifft ein Gerät zur Messung von Abständen bestehend aus einer Schiene, einem an dieser Schiene angeordneten Schieber, der einen ersten als Verstellorgan ausgebildeten Teilschieber und einen zweiten als Messeelement mit Messaufnehmer ausgestatteten Teilschieber aufweist, Verbindungsorganen zwischen diesen ersten und zweiten Teilschiebern, welche eine Messkraftvorrichtung zur Erziehlung einer vom Messaufnehmer auf ein Messobjekt auszuübende Messkraft aufweisen, und einer auslösbaren Bremsvorrichtung zur Verriegelung des ersten Teilschiebers auf der Schiene.

Ein solches Gerät ist in der EP 0 223 736 beschrieben und erlaubt bei niedrigen Messdruck präzise Höhenmessungen auszuführen. Das bekannte Gerät eignet sich jedoch nicht zum Anreissen, da sich bei diesem Arbeitsvorgang dass Messelement nicht bewegen darf, jedoch sehr präzise eingestellt werden soll.

Die CH 228 228 beschreibt ebenfalls ein derartiges Gerät bei dem ebenfalls das Messelement ständig über eine im Messkraft bestimmende Feder mit dem Verstellorgan verbunden ist, so dass beim Anreissen durch ein eventuelles relatives Verschieben des Messelementes gegenüber dem Verstellelement Messfehler enstehen können.

In der US 2 371 742 wird ein Messgerät beschrieben, das zwei an einer Säule verschiebbare Querarme aufweist, wobei der ein Messelelement tragende Arm mittels einer Schraube zur Feineinstellung gegenüber dem anderen Arm verstellt werden kann. Dieses Gerät erlaubt es nicht, Messungen mit einer vorbestimmten Messkraft durchzuführen.

Das in der US 3 113 385 beschriebene Messgerät besitzt ebenfalls einen im Messelement tragenden Schieber, welcher über eine Feineinstellschraube mit einem Zustellschieber verbunden ist. Dieses Gerät eignet sich zum Anreissen, jedoch Messungen mit einer vorbestimmten Messkraft können damit nicht ausgeführt werden.

Die Erfindung hat zum Ziel, den oben genannten Nachteilen abzuhelfen und ein Gerät zu schaffen, das sowohl zur Messung mit vorbestimmter Messkraft, wie auch zum präzisen Anreissen leicht verwendbar und umstellbar ist.

Das erfindungsgemässe Gerät ist zu diesem Zweck dadurch gekennzeichnet, dass die Verbindungsorgane weiterhin eine Feineinstellvorrichtung zur Regulierung der relativen Lage des zweiten Teilschiebers gegenüber dem ersten Teilschieber und eine Umstellvorrichtung zum Wirksammachen entweder der Feineinstellvorrichtung oder der Messkraftvorrichtung aufweisen, wobei die Betätigung der Umstellvorrichtung die Feineinstellvorrichtung derart verriegelt, beziehungsweise entriegelt, dass die zwei Teilschieber über die Feineinstellvorrichtung zur Ausführung eines Anreissarbeitsganges fest miteinander verbunden sind, beziehungsweise zur Ausführung einer Messung mit vorbestimmter Messkraft gegeneinander freigegeben werden und beweglich miteinander über die Messkraftvorrichtung verbunden sind.

Bei festgeklemmten Zustellorgan kann somit die Lage des zweiten die Anreissnadel tragenden Teilschiebers genau eingestellt werden, wobei das Gerät bei ausgeschalteter Feineinstellvorrichtung zum üblichen Höhenmessen mit Messdruckkontrolle verwendbar ist.

Vorteilhafterweise weist die Feinstellvorrichtung ein mit dem einen Teilschieber verbundenes Gleitstück auf, das in einer Führung des anderen Teilschiebers in Messrichtung gleitend gelagert ist und das mittels eines Regulierorgans mit diesem anderen Teilschieber in Verbindung steht, wobei die Umstellvorrichtung derart ausgebildet ist, dass sie das Gleitstück in der Führung zur Ausführung eines Anreissarbeitsganges verriegelt und zur Ausführung eine Messung entriegelt.

In einer bevorzugten Ausführungsform ist im ersten Teilschieber ein in Messrichtung verschiebbarer Stössel gleitend gelagert, durch welchen eine mit dem zweiten Teilschieber verbundene Stange führt, die im Stössel mittels der Umstellvorrichtung verriegelbar gelagert ist, wobei der Stössel mittels des Regulierorgans im ersten Teilschieber verschoben werden kann.

Dies erlaubt eine sehr einfache Bauart, wobei vorteilhafterweise das Regulierorgan aus einem im ersten Teilschieber gelagerten Excenter besteht, welcher in einen Ausschnitt des Stössels eingreift, wobei der Stössel federnd gegen den Excenter gedrückt wird, so dass die Feineinstellung mittels desselben spielfrei erfolgt.

Der Gebrauch eines Excenters erlaubt dabei ein rasches und präzises Feineinstellen auf ein vorgegebenes Mass.

Vorzugsweise besteht die Messkraftvorrichtung aus einer Stange, welche einerseits mit dem einen Teilschieber verbunden ist, andererseits durch den anderen Teilschieber geführt ist, und welche mit einem Bund versehen ist, auf den sich über Scheiben gegenseitig zwei Federn abstützen, die andererseits gegen Anschläge im benannten anderen Teilschieber abgestützt sind, mit der Wirkung, dass beim Zustellen des Schiebers um ein gewisses Mass über den Berührungspunkt eines am einen Teilschieber befestigten Tasters mit einem Messobjekt hinaus ein der Kraft der Federn entsprechender Messdruck ausgeübt wird.

Diese Bauart erlaubt, Messungen mit vorbestimmten Messdruck auszuführen, wenn die Feineinstellvorrichtung ausgeschaltet ist.

Ein Gerät besonders leichter Ausführungsart wird dadurch erreicht, dass das Gewicht der beiden Teilschieber zumindest teilweise durch einen Gegenzug aufgehoben ist, der aus einer Feder besteht, deren eines Ende am ersten Teilschieber befestigt ist, über zu mindest zwei an der Schiene angebrachte Rollen führt und deren anderes Ende an der Schiene befestigt ist.

Auf diese Weise kann ein Gegengewicht vermieden werden, das Gerätgewicht tief gehalten werden und auch seine Transportfähigkeit erleichtert werden.

Weitere vorteilhafte Ausgestaltungen der Erfindung ergeben sich aus den Merkmalen der abhängigen Patentansprüche und der nachfolgenden Beschreibung einer Ausführungsform und einer Variante, die in der beigefügten Zeichnung dargestellt sind.

Es zeigen:
Fig. 1 eine Seitenansicht des Messgerätes.
Fig. 2 eine Ansicht des Messelements und des mit ihm gekuppelten Verstellorgans.
Fig. 3 einen Schnitt A-A durch Fig. 2.
Fig. 4 ein Teilschnitt durch die Feineinstellvorrichtung einer Variante.

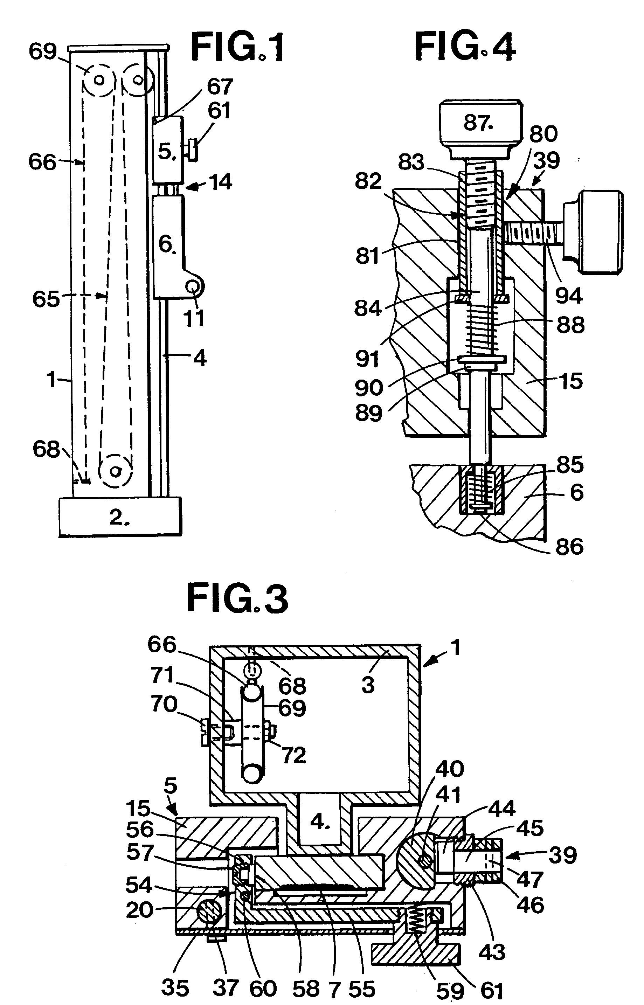

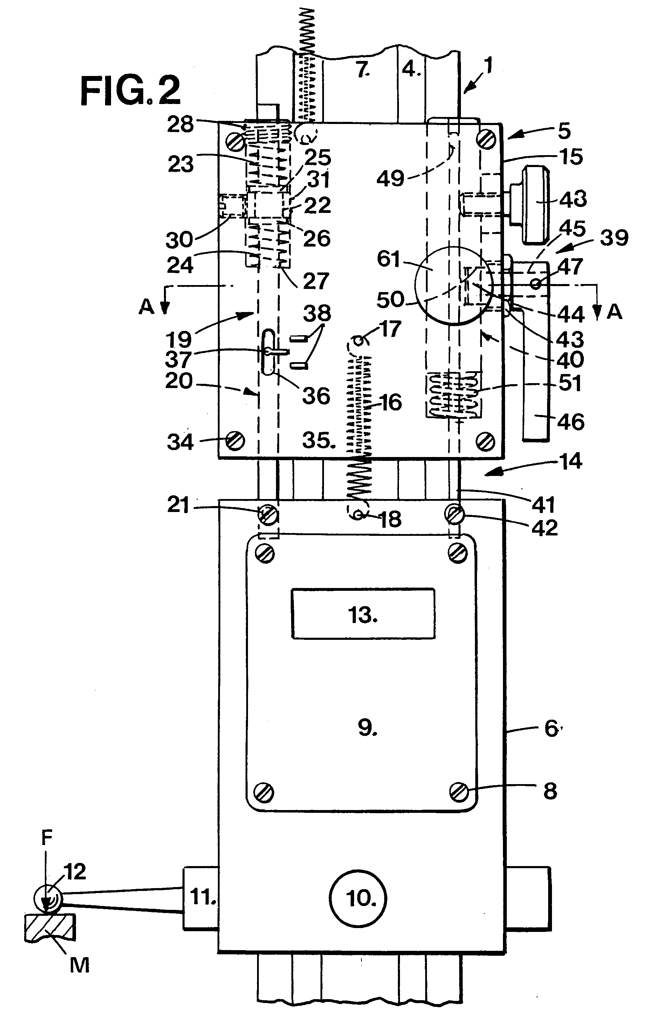

Wie in den Figuren 1 bis 3 ersichtlich weist das Messgerät eine Säule 1 mit einem Fuss 2 auf. Die aus einem Hohlprofil 3 bestehenden Säule ist mit einer Schiene 4 verbunden, die einem Schieber 14 als Führung dient. Der letztere umfasst einen als Verstellorgan 5 ausgebildeten Teilschieber und einen als Messelement 6 dienender Teilschieber. In der Schiene 4 eingelassen befindet ,sich ein Massstab 7, welcher von einer im, Messelement 6 eingebauten, mittels Schrauben 8 befestigten Aufnahmeeinheit 9 mit Anzeigefeld 13 abgelesen wird.

Das Messelement 6 enthält einen mit einer Schraube 10 festklemmbaren Schaft 11, dessen Ende als Kugeltaster 12 ausgebildet ist.

Das Verstellorgan 5 besteht aus einem Körper 15, welcher auf der Schiene 4 geführt ist. Ein Feder 16 ist einerseits an einen Stift 17 des Körpers 15 und andererseits an einem Stift 18 des Messelementes 6 eingehängt und so dimensioniert, dass ihre Federkraft dem Gewicht des Messelementes 6 entspricht, welches sich dadurch in der Schwebe befindet.

Zur Erziehlung einer konstanten Messkraft, weist das Gerät eine Kontrollvorrichtung 19 auf. Eine im Körper 15 gleitend angeordnete Achse 20 ist dazu an ihrem unteren Ende mittels einer Schraube 21 mit dem Messelement 6 verbunden. Sie weist an ihrem entgegengesetzten Ende einen Bund 22 auf, auf welchen zwei Federn 23 und 24 über Scheiben 25, 26 abgestützt sind. Auf ihren entgegengesetzten Seiten sind diese Federn 23, 24 einerseits auf eine Fläche 27 im Körper 15, anderseits auf eine im Körper 15 befindliche Verschlussschraube 28 abgestützt. Die Scheiben 25, 26 stützen sich ihrerseits auf eine im Körper 15 mittels einer Schraube 30 verriegelten Hülse 31 ab.

Das Verstellorgan 5 weist auf seiner Vorderseite einen mittels Schrauben 34 befestigten Deckel 35 auf. Körper 15 und Deckel 35 sind mit einer Längsöffnung 36 versehen, durch welche ein auf der Achse 20 angebrachter Zeiger 37 ragt, der gegenüber zweier auf dem Deckel 35 angebrachten Marken 38 spielt.

Im Körper 15 ist auch ein Stössel 40 beweglich gelagert, der eine Bohrung 49 aufweist, durch welche eine ebenfalls beweglich gelagerte Stange 41 führt, die im Messelement 6 mittels einer Schraube 42 festgehalten ist. In einer im Körper 15 befestigten Schraube 43 ist eine mit einem Excenter 44 versehene Achse 45 gelagert und mit einem Hebel 46 versehen, welcher mittels eines Stiftes 47 auf ihr festgehalten ist. Der Excenter 44 greift in einen Ausschnitt 50 des Stössels 40 ein, wobei der Stössel mittels einer Feder 51 gegen den Excenter 44 gedrückt wird. Dadurch wird einerseits das Spiel zwischen Excenter 44 und Stössel 40 aufgehoben, anderseits durch die dabei erzielte Reibung zwischen Stössel 40 und Excenter 44 dafür gesorgt, dass eine einmal eingestellte Excenterlage gesichert ist.

Mittels einer im Stössel 40 befindlichen Schraube 48 kann die Stange 41 im Stössel blockiert werden. Das Excenter 44 bildet somit bei blockierter Stange 41 eine Feineinstellvorrichtung 39, die es erlaubt das Messelement 6 gegenüber dem Verstellorgan 5 über kleine Abstände zu verschieben. Die Schraube 48 dient dabei als Umstellvorrichtung, die es ermöglicht, entweder die Kontrollvorrichtung 19 zur Ausführung einer Messung mit vorbestimmter Messkraft oder die Feineinstellvorrichtung 39 zur Ausführung eines Anreissarbeitsganges in Betrieb zu setzen.

Der Körper 15 wird auf der Schiene 4 der Säule 1 durch eine als Hebel 55 ausgebildete Bremse 54 festgehalten (Fig. 3). Auf dem Hebelende 56 befindet sich eine in die Stellschraube 57 eingelassene Pastille 58, welche, unter dem Einfluss einer auf das andere Hebelende einwirkenden Feder 59 gegen die Schiene 4 gepresst wird. Der Hebel 55 ist auf einem im Körper 15 eingelassenen Stift 60 gelagert. Durch Druck auf einen im Hebel 55 eingelassenen Knopf 61 wird ersterer entlastet, wodurch der Körper 15 auf der Schiene 4 ohne Widerstand verschoben werden kann.

Zur leichteren Bedienung ist es vorteilhaft, das Gewicht von Messelement 6 und Verstellorgan 5 durch einen Gegenzug 65 mindestens teilweise aufzuheben. Dies geschieht (Fig. 1 und 3) durch eine Feder 66, welche einerseits am Körper 15 des Verstellorganes durch einen Stift 67, anderseits an der Säule 1 über einen Stift 68 befestigt ist. In der Säule 1 sind drei Rollen 69 auf mittels Schrauben 70 festgehaltenen Achsen 71 gelagert und durch Sprengringe 72 gesichert. Die Feder 66 ist über die drei Rollen 69 geführt.

Da es wichtig ist, dass die Zugkraft der Feder 66 während der Verstellung des Schiebers 14 möglichst wenig ändert und auf keinen Fall die vom Verstellorgan 5 über die Bremse 54 auf die Schiene 4 ausgeübte Bremskraft übersteigt, muss die Feder 66 eine möglichst flache Charakteristik aufweisen. Dies wird erreicht durch die in Fig. 1 gezeigte Rollenführung. Zur Erzielung einer befriedigenden Wirkung ist es notwendig, dass die Länge der gespannten Feder in der obersten Lage des Verstellorganes 5 mindestens zwei Mal dem gesamten Verstellweg entspricht. Es ist von Vorteil, eine Feder mit eingewickelter Vorspannung vorzusehen, da damit eine besonders flache Charakteristik, respektive Federkennlinie, erreicht wird.

Im folgenden soll die Wirkungsweise der verschiedenen Elemente beschrieben werden :

Die Grobverstellung des Schiebers 14 erfolgt über das Verstellorgan 5. Durch Niederdrücken des Knopfes 61 wird derselbe freigegeben und kann nun in Messrichtung verschoben werden, wobei das Messelement 6 mittels der Achse 20 mitgenommen wird. Das Verstellorgan 5 wird nun zum Beispiel solange nach unten bewegt, bis der Taster 12 ein Messobjekt M berührt. Durch weiteres Zustellen des Verstellorganes wird die Feder 23 zusammengedrückt und beaufschlagt nun den Taster mit einer vorbestimmten Messkraft, welche erreicht wird, wenn der Zeiger 37 auf die obere Marke 38 zeigt. Ein analoger Fall ergibt sich, wenn der Messvorgang von unten nach oben erfolgt.

Beim Anreissen wird der Tester 12 durch eine Reissnadel ersetzt, welche möglichst genau auf ein bestimmtes Mass einzustellen ist. Unter Druck auf den Knopf 61 wird das Messelement 6 mittels des Verstellorganes 5 soweit verstellt, bis das vorbestimmte Mass angenähert im Anzeigefeld 13 der Aufnahmeeinheit 9 erscheint. Durch Blockieren der Stange 41 im Stössel 40 mittels der als Umstellvorrichtung dienenden Schraube 48 wird nun das Verstellorgan 5 fest mit dem Messelement 6 verbunden. Durch Drehen des Excenters 44 mittels des Hebels 46 kann nun die Feineinstellung spielfrei erfolgen. Weitere Mass-Einstellungen erfolgen durch Rückstellen des Hebels 46 in die Ausgangslage, erneutes Zustellen des Verstellorganes u.s.f. Soll vom Anreissen auf Messen umgestellt werden, so ist die Schraube 48 zu lösen, wodurch die Stange 41 und damit das Messelement 6 freigegeben werden.

Die in Figur 4 dargestellte Variante der Feineinstellvorrichtung 39 weist statt des Excenters 44 eine Schraubenverstellung 80 auf. Diese umfasst eine in einer Bohrung 81 des Körpers 15 gleitend gelagerte und mit einem Innengewinde 82 versehene Hülse 83 und eine mit der Hülse im Eingriff stehende Schraubenstange 84, welche an einem Ende mittels einer Feder 85 und einem Sprengring 86 spielfrei drehbar im Messelement 6 aufgenommen ist und am anderen Ende einen Betätigungsknopf 87 trägt. Eine Feder 88 stützt sich einerseits auf eine in Berührung mit einem Bundring 89 der Schraubenstange 84 stehende Scheibe 90 und andererseits auf einen Endring 91 der Hülse 83. Die Feder 88 erlaubt es, jegliches Gewindespiel zwischen Hülse 83 und Schraubenstange 84 zu vermeiden. Mittels einer im Körper 15 befindlichen und als Umstellvorrichtung dienenden Schraube 94 kann die Hülse 83 im Körper 15 blockiert werden. Die Feineinstellung zwischen dem auf der Schiene 4 verriegelten Verstellorgan 5 und dem Messelement 6 erfolgt somit nach Blockieren der Hülse 83 durch Drehen des Betätigungsknopfes 87. Das Mass ist im Anzeigefeld 13 ersichtlich.

Die Erfindung ist natürlich nicht nur auf die dargestellten Ausführungsbeispiele beschränkt, sondern die letzteren können innerhalb des in den Patentansprüchen definierten Erfindungsgedankens weitere Abänderungen erfahren. So kann zum Beispiel das Messelement 6 am Verstellorgan 5 zur Vermeidung von Schwingungen über eine Gegengewichtsanordnung abgestützt sein. Der Gegenzug 65 kann durch eine Rollfeder oder ein Gegengewicht ersetzt werden. Die Kontrolle des Messdruckes kann durch andere Vorrichtungen, zum Bespiel Verriegelungsorgane, erfolgen. Die Feineinstellvorrichtung zwischen dem ersten und zweiten Teilschieber könnte ebenfalls in nicht vertikal angeordnete Messgeräten eingebaut werden, wie zum Beispiel Schieblehren und horizontal Messchiebern mit einem ein Verstellorgan aufweisenden Schieber.

## Patentansprüche

1. Gerät zur Messung von Abständen bestehend aus einer Schiene (4), einem an dieser Schiene angeordneten Schieber (14), der einen ersten (5) als Verstellorgan ausgebildeten Teilschieber und einen zweiten (6) als Messelement mit Messaufnehmer (9) ausgestatteten Teilschieber aufweist, Verbindungsorganen (16, 19, 39) zwischen diesen ersten und zweiten Teilschiebern (5, 6), welche eine Messkraftvorrichtung (19) zur Erzielung einer vom Messaufnehmer (9) auf ein Messobjekt (M) auszuübenden Messkraft aufweisen, und einer auslösbaren Bremsvorrichtung (54) zur Verriegelung des ersten Teilschiebers (5) auf der Schiene (4), dadurch gekennzeichnet, dass die Verbindungsorgane (16, 20, 41) weiterhin eine Feineinstellvorrichtung (39) zur Regulierung der relativen Lage des zweiten Teilschiebers (6) gegenüber dem ersten Teilschieber (5) und eine Umstellvorrichtung (48; 94) zum Wirksammachen entweder der Feineinstellvorrichtung (39) oder der Messkraftvorrichtung (19) aufweisen, wobei die Betätigung der Umstellvorrichtung die Feineinstellvorrichtung derart verriegelt, beziehungsweise entriegelt, dass die zwei Teilschieber (5, 6) über die Feineinstellvorrichtung (39) zur Ausführung eines Anreissarbeitsganges fest miteinander verbunden sind, beziehungsweise zur Ausführung einer Messung mit vorbestimmter Messkraft gegeneinander freigegeben werden und beweglich miteinander über die Messkraftvorrichtung (19) verbunden sind.

2. Gerät gemäss Anspruch 1, **dadurch gekennzeichnet,** dass die Feineinstellvorrichtung (39) ein mit dem einen Teilschieber (6) verbundenes Gleitstück (41; 83, 84) aufweist, das in einer Führung (49; 81) des anderen Teilschiebers (5) in Messrichtung gleitend gelagert ist und das mittels eines Regulierorgans (44; 84) mit diesem anderen Teilschieber (5) in Verbindung steht, wobei die Umstellvorrichtung (48; 94) derart ausgebildet ist, dass sie das Gleitstück (41; 83, 84) in der Führung (49; 81) zur Ausführung eines Anreissarbeitsganges verriegelt und zur Ausführung einer Messung entriegelt.

3. Gerät gemäss Anspruch 2, **dadurch gekennzeichnet,** dass im ersten Teilschieber (5) ein in Messrichtung verschiebbarer Stössel (40) gleitend gelagert ist, durch welchen eine mit dem zweiten Teilschieber (6) verbundene Stange (41) führt, die im Stössel (40) mittels der Umstellvorrichtung (48) verriegelbar gelagert ist, wobei der Stössel (40) mittels des Regulierorgans (44) im ersten Teilschieber (5) verschoben werden kann.

4. Gerät gemäss Anspruch 3, **dadurch gekennzeichnet,** dass das Regulierorgan aus einem im ersten Teilschieber (5) gelagerten Excenter (44) besteht, welcher in einen Ausschnitt (50) des Stössels (40) eingreift, wobei der Stössel (40) federnd gegen den Excenter (44) gedrückt wird, so dass die Feineinstellung mittels desselben spielfrei erfolgt.

5. Gerät gemäss Anspruch 2, **dadurch gekennzeichnet,** dass eine Schraubenstange (84) drehbar mit dem zweiten Teilschieber (6) in Verbindung steht und mit dem Innengewinde (82) einer Hülse (83) im Eingrift steht, wobei die letztere gleitend im ersten Teilschieber (5) gelagert ist und in diesem mittels der Umstellvorrichtung (94) verriegelt werden kann.

6. Gerät gemäss Anspruch 5, **dadurch gekennzeichnet,** dass eine Feder (88) derart zwischen Vorsprüngen (90, 91) der Schraubenstange (84) und der Hülse (83) gelagert ist, dass die Feineinstellung durch Drehen der Schraubenstange (84) spielfrei erfolgt.

7. Gerät gemäss Anspruch 1, **dadurch gekennzeichnet,** dass zwischen dem ersten und zweiten Teilschieber (5, 6) eine Feder (16) eingebaut ist, deren Zugkraft dem Gewicht des zweiten Teilschiebers (6) entspricht.

8. Gerät gemäss Anspruch 1, **dadurch gekennzeichnet,** dass die Messkraftvorrichtung (19) aus einer Stange (20) besteht, welche einerseits mit dem einen Teilschieber (6) verbunden ist, andererseits durch den anderen Teilschieber (5) geführt ist, und welche mit einem Bund (22) versehen ist, auf den sich über Scheiben (25, 26) gegenseitig zwei Federn (23, 24) abstützen, die andererseits gegen Anschläge (27, 28) im benannten anderen Teilschieber (5) abgestützt sind, mit der Wirkung, dass beim Zustellen des Schiebers (14) um ein gewisses Mass über den Berührungspunkt eines am einen Teilschieber (5) befestigten Tasters (12) mit einem Messobjekt (11) hinaus ein der Kraft der Federn (23, 24) entsprechender Messdruck ausgeübt wird.

9. Gerät gemäss Anspruch 8, **dadurch gekennzeichnet,** dass die Stange (20) mit einem Zeiger (37) versehen ist, der gegenüber auf dem benannten anderen Teilschieber (5) angebrachten Marken (38) spielt.

## Claims

1. Device for measuring distances comprising a rail (4), a slide (14) arranged on this rail exhibiting a first (5) component slide fashioned as an adjusting member and a second (6) component slide equipped as a measuring element with a measuring pickup (9), connecting members (16, 19, 39) between these first and second component slides (5,6), which comprise a measuring force device (19) for obtaining a measuring force exerted by the measuring pickup (9) on an object to be measured (M), and a triggerable stopping device (54) for locking the first component slide (5) on the rail (4), characterized in that the connecting members (16,20,41) comprise furtheron a precision adjustment device (39) for regulating the relative position of the second component slide (6) with respect to the first component slide (5), and a change-over device (48;94) making it possible to activate either the precision adjustment device (39) or the measuring force device (19), wherein the actuation of the change-over device locks, respectively unlocks, the precision adjustment device in such a way, that the two component slides (5,6) are fixedly connected each to the other over the precision adjustment device (39) for the execution of a tracing operation, respectively that they are released from each other and movably connected each to the other by means of the measuring force device (19) for the execution of a measurement with a predetermined measuring force.

2. Device according to claim 1, characterized in that the precision adjustment device (39) comprises a sliding piece (41; 83,84) connected with one of the component slides (6), this sliding piece being slidingly supported in a guide means (49;81) of the other component slide (5) in the measuring direction and being connected with this other component slide (5) by means of a regulating member (44;84), wherein the change-over device (48;94) is designed so that it locks the sliding piece (41; 83,84) in place in the guide means (49;81) for the execution of a tracing operation and unlocks this sliding piece for the execution of a measurement.

3. Device according to claim 2, characterized in that a plunger (40) displaceable in the measuring direction is slidingly supported in the first component slide (5), a rod (41) connected to the second component slide (6) being extended through this plunger and being lockably supported in the plunger (40) by means of the change-over device (48), the plunger (40) being displaceable in the first component slide (5) by means of the regulating member (44).

4. Device according to claim 3, characterized in that the regulating member consists of an eccentric (44) supported in the first component slide (5), this eccentric engaging into a cutout (50) of the plunger (40), the plunger (40) being resiliently urged against the eccentric (44) so that the precision adjustment by means thereof takes place without clearance.

5. Device according to claim 2, characterized in that a screw stem (84) is rotatably connected with the second component slide (6) and is in engagement with the internal thread (82) of a sleeve (83), the latter being slidingly supported in the first component slide (5) and being lockable in the latter by means of the change-over device (94).

6. Device according to claim 5, characterized in that a spring (88) is supported between projections (90,91) of the screw stem (84) and of the sleeve (83) in such a way that the precision adjustment takes place without clearance by rotation of the screw stem (84).

7. Device according to claim 1, characterized in that a spring (16) is installed between the first and second component slides (5,6), the tensile force of this spring corresponding to the weight of the second component slide (6).

8. Device according to claim 1, characterized in that the measuring force device (19) consists of a rod (20) which, on the one hand, is connected to one of the component slides (6), on the other hand is extended through the other component slide (5), this rod being provided with a collar (22) on which two springs (23,24) are mutually supported by way of disks (25,26), these springs resting, on the other hand, against stops (27,28) in the aforementioned other component slide (5), with the effect that, upon adjusting the slide (14) by a certain measure past the contact point of a feeler (12) attached to one of the component slides (5) with an object to be measured (11), a measuring force is exerted corresponding to the force of the springs (23,24).

9. Device according to claim 1, characterized in that the rod (20) is provided with a pointer (37) moving with respect to markings (38) provided on the aforementioned other component slide (5).

## Revendications

1. Instrument pour mesurer des longueurs comprenant un rail (4), un curseur (14) disposé sur ce rail et présentant un premier curseur partiel (5) constituant un organe de déplacement et un second curseur partiel (6) équipé en tant que capteur de mesure avec un élément de mesure, des organes de connexion (16, 19, 39) entre ces premier et second curseurs partiels (5, 6), qui comprennent un dispositif de force de mesure (19) pour obtenir une force de mesure que le capteur de mesure (9) exerce sur l'objet à mesurer (M), et un dispositif de frein (54) destiné à verrouiller le premier curseur partiel (5) sur le rail (4), caractérisé en ce que les organes de connexion (16, 20, 41) comprennent en outre un dispositif de réglage précis (39) pour régler la position relative du second curseur partiel (6) par rapport au premier curseur partiel (5) et un dispositif d'inversion (48; 94) pour rendre actif soit le dispositif de réglage précis (39) soit le dispositif de force de mesure (19), l'actionnement du dispositif d'inversion verrouillant, respectivement déverrouillant, le dispositif de réglage précis de telle façon que les deux curseurs partiels (5, 6) sont rigidement reliés l'un avec l'autre grâce au dispositif de réglage précis (39) pour effectuer une opération de traçage, respectivement que les deux curseurs partiels sont libérés l'un par rapport à l'autre et reliés de façon mobile grâce au dispositif de force de mesure (19) pour effectuer une mesure avec une force de mesure prédéterminée.

2. Instrument selon la revendication 1, caractérisé en ce que le dispositif de réglage précis (39) comprend une pièce coulissante (41; 83, 84) fixée à l'un des curseurs partiels (6), agencée de façon coulissante suivant la direction de mesure dans un guidage (49; 81) de l'autre curseur partiel (5) et connectée à cet autre curseur partiel (5) par l'intermédiaire d'un organe de réglage (44; 94), le dispositif d'inversion (48; 94) étant agencé de façon que la pièce coulissante (41; 83, 84) soit verrouillée dans le guidage (49; 81) pour effectuer une opération de traçage et déverrouillée pour effectuer une mesure.

3. Instrument selon la revendication 2, caractérisé en ce qu'un coulisseau (40) est monté de façon coulissante suivant la direction de mesure dans le premier curseur partiel (5), une tige (41) reliée au second curseur partiel (6) traversant ce coulisseau et est agencée dans ce dernier de façon à pouvoir être verrouillée grâce au dispositif d'inversion (48), le coulisseau (40) pouvant être déplacé dans le premier curseur partiel (5) grâce à l'organe de réglage (44).

4. Instrument selon la revendication 3, caractérisé en ce que l'organe de réglage est constitué par un excentrique (44) logé dans le premier curseur partiel (5) et s'engageant dans une entaille (50) du coulisseau (40), ce dernier étant sollicité élastiquement contre l'excentrique (44), de façon que le réglage fin par l'intermédiaire de celui-ci s'effectue sans jeu.

5. Instrument selon la revendication 2, caractérisé en ce qu'un boulon fileté (84) est relié de façon tournante au second curseur partiel (6) et s'engrène avec le pas de vis intérieur (82) d'une douille (83), cette dernière étant montée de façon coulissante dans le premier curseur partiel (5) et pouvant être verrouillée dans celui-ci grâce au dispositif d'inversion (94).

6. Instrument selon la revendication 5, caractérisé en ce qu'un ressort (88) est disposé de telle manière entre des saillies (90, 91) du boulon fileté (84) et de la douille (83), que le réglage fin par rotation du boulon fileté (84) s'effectue sans jeu.

7. Instrument selon la revendication 1, caractérisé en ce qu'un ressort (16) est agencé entre le premier et le second curseur partiel (5, 6), la force de traction de ce ressort correspondant au poids du second curseur partiel (6).

8. Instrument selon la revendication 1, caractérisé en ce que le dispositif de force de mesure (19) est constitué par une tige (20) qui est reliée d'une part avec l'un des curseurs partiels (6), qui traverse d'autre part l'autre curseur partiel (5) et qui est munie d'un collet (22), sur lequel deux ressorts (23, 24) s'appuient des deux côtés par l'intermédiaire de rondelles (25, 26), les ressorts prenant d'autre part appui sur deux butées (27, 28) dans ledit autre curseur partiel (5), avec l'effet que, lors de la mise en place du curseur (14) suivant un certain degré au delà du point de contact d'un tâteur (12) fixé à l'un des curseurs partiels (5) avec l'objet à mesurer (M), une force de mesure correspondant à la force des ressorts (23, 24) est exercée.

9. Instrument selon la revendication 8, caractérisé en ce que la tige (20) est munie d'un index (37) qui se déplace en regard de marques (38) appliquées sur ledit autre curseur partiel (5).
